# EUROPÄISCHE PATENTANMELDUNG

(11) **EP 2 487 397 A1**
(43) Veröffentlichungstag der Anmeldung: **15.08.2012**
(21) Anmeldenummer: 11009231.9
(22) Anmeldetag: 22.11.2011
(51) Int. Cl.: F16L 33/04, F16B 35/04

(54) **Spannschelle**

(30) Priorität: 09.02.2011 DE 102011010655
(71) Anmelder: NORMA Germany GmbH, 63477 Maintal (DE)
(72) Erfinder: Krüger, Manfred, 63654 Büdingen (DE)
(74) Vertreter: Knoblauch, Andreas

(57) **Zusammenfassung**

Spannschelle (1) mit einem ringförmig ausgebildeten Schellenband (2 u. 3), das zwei einander benachbarte Enden (6, 7) aufweist, die durch eine Spannvorrichtung (9) miteinander verbindbar sind, wobei die Spannvorrichtung (9) eine Spannschraube (10) mit einem Schraubenkopf und einem Befestigungsabschnitt und ein Gegengewindeelement (11) aufweist, mit dem die Spannschraube (10) verschraubbar ist, wobei

der Befestigungsabschnitt entlang seiner Länge mindestens einen flexiblen Bereich (17) aufweist.

## Beschreibung

Die Erfindung betrifft eine Spannschelle mit einem ringförmig ausgebildeten Schellenband, das zwei einander benachbarte Enden aufweist, die durch eine Spannvorrichtung miteinander verbindbar sind, wobei die Spannvorrichtung eine Spannschraube mit einem Schraubenkopf und einem Befestigungsabschnitt und ein Gegengewindeelement aufweist, mit dem die Spannschraube verschraubbar ist.

Eine derartige Spannschelle wird beispielsweise verwendet, um zwei Rohre miteinander zu verbinden. Eine Möglichkeit besteht darin, dass ein Ende eines Rohres in das Ende eines anderen Rohres eingesteckt wird. Die Spannschelle wird dann verwendet, um das äußere Rohr auf dem inneren Rohr fest zu spannen. In einem anderen Beispiel ist die Spannschelle als Profilschelle ausgebildet. Eine Profilschelle wird verwendet, um zwei stirnseitig aneinander anliegende Rohre miteinander zu verbinden, die mit konischen Flanschen versehen sind, über die die Spannschelle greift.

In der Regel ist es zur Montage der Spannschelle erforderlich, dass die Spannschelle aufgebogen wird, um auf den Rohren montiert werden zu können. Hierzu ist es erforderlich, dass die Spannschraube und das Gegengewindeelement voneinander getrennt sind, so dass eine Öffnung in der Spannschelle zur Verfügung steht. Wenn die beiden Enden des Schellenbandes wieder aufeinander zu bewegt werden, muss die Spannschraube in Eingriff mit dem Gegengewindeelement gebracht werden. Dies ist in der Regel nicht ganz einfach, weil die Richtung der Gewinde von Spannschraube und Gegengewindeelement nach dem Aufbiegen des Schellenbandes und dem Auseinanderbiegen der Enden des Schellenbandes nicht mehr genau genug übereinstimmen.

Man hat bisher Lösungen zur Vormontage (Voreinhängungen) vorgeschlagen, bei der man Rasthaken oder spezielle Spannkopfgeometrien verwendet hat. Hier sind noch zahlreiche Versuche für Funktionsüberprüfungen bei minimalen und maximalen Toleranzen erforderlich.

Der Erfindung liegt die Aufgabe zugrunde, das Verbinden von Spannschraube und Gegengewindeelement bei der Montage von Spannschellen zu erleichtern.

Diese Aufgabe wird bei einer Spannschelle der eingangs genannten Art dadurch gelöst, dass der Befestigungsabschnitt entlang seiner Länge mindestens einen flexiblen Bereich aufweist.

Bei dieser Lösung kann man die Spannschraube auf einem Teil ihrer Länge verbiegen, so dass die Spitze der Spannschraube auf einfache Weise mit dem Gegengewindeelement in Eingriff gebracht werden kann und zwar dergestalt, dass die Gewinderichtung des Gegengewindeelements mit der Richtung des Endes der Spannschraube, das mit dem Gegengewindeelement in Eingriff kommt, übereinstimmt. Sobald ein derartiger Eingriff hergestellt worden ist, lässt sich die Spannschraube gegenüber dem Gegengewindeelement weiter drehen, um die Spannschelle zu spannen. Man kann eine derartige Spannschelle dann auch vormontieren, indem man lediglich das Ende des Befestigungsabschnitts mit dem Gegengewindeelement in Eingriff bringt, so dass der Innendurchmesser der Spannschelle noch verhältnismäßig groß ist. In diesem Zustand lässt sich in vielen Fällen die Spannschelle vorpositionieren.

Bevorzugterweise ist der flexible Bereich an einem Ende des Befestigungsabschnitts ausgebildet, der vom Schraubenkopf abgewandt ist. Man kann den Befestigungsabschnitt dann bei der Montage dort verbiegen, wo es erforderlich ist, nämlich im Bereich des Gegengewindeelements. Hierfür reicht es im Grunde aus, die Spitze des Befestigungsabschnitts, die dem Gegengewindeelement zugewandt ist, zu verformen oder zu verbiegen, um den Befestigungsabschnitt in Eingriff mit dem Gegengewinde-Befestigungsabschnitt in Eingriff mit dem Gegengewindeelement zu bringen. Der Rest des Befestigungsabschnitts kann unverformbar gehalten werden.

Bevorzugterweise ist der flexible Bereich an einem Fortsatz ausgebildet, der mit einem Schaft der Spannschraube verbunden ist. Man kann dann eine herkömmliche Spannschraube verwenden und diese mit einem flexiblen Bereich versehen.

Hierbei ist bevorzugt, dass der Fortsatz eine Länge aufweist, bei der im gespannten Zustand der Spannschelle das Gegengewindeelement mit dem Schaft in Eingriff steht. Der flexible Bereich, d.h. der Fortsatz, wird lediglich verwendet, um die Spannschraube und das Gegengewindeelement miteinander in Eingriff zu bringen und gegebenenfalls die beiden Enden des Spannbandes aufeinander zu zu bewegen. Sobald für diese Bewegung eine größere Kraft erforderlich ist, steht das Gegengewindeelement bereits mit dem Schaft in Eingriff, so dass die notwendigen Kräfte auch aufgebracht werden können. Die Gefahr, dass der Fortsatz dabei beschädigt wird, besteht im Grunde nicht. Der Fortsatz kann vielmehr als Sicherheitsmerkmal verwendet werden. Wenn bereits höhere Kräfte aufgebracht werden, obwohl der Schaft noch nicht in Eingriff mit dem Gegengewindeelement steht, dann kann der Fortsatz durchaus reißen, sich vom Schaft lösen oder mit seiner Befestigungsgeometrie außer Eingriff mit dem Gegengewindeelement kommen. Dies ist ein eindeutiges Zeichen dafür, dass die Spannschelle fehlerhaft montiert war.

Bevorzugterweise sind der Fortsatz und der Schaft aus unterschiedlichen Materialien gebildet, insbesondere der Schaft aus einem Metall und der Fortsatz aus einem Kunststoff. Das Metall des Schaftes kann in ausreichendem Maße Kräfte aufnehmen, die zum Spannen der Spannschelle erforderlich sind. Der Kunststoff kann so flexibel gewählt werden, dass die Spannschraube in ihrem flexiblen Bereich so verformt werden kann, dass das Einfädeln der Spannschraube in das Gegengewindeelement erleichtert wird.

Vorzugsweise ist an einem der beiden Teile Schaft oder Fortsatz ein Vorsprung ausgebildet, der in eine Ausnehmung am anderen der beiden Teile Fortsatz oder Schaft eingreift. Man erreicht mit dieser Ausbildung eine verbesserte Verbindung zwischen Fortsatz und Schaft, d.h. es steht nicht nur die Stirnseite von Fortsatz und Schaft als Verbindungsfläche zur Verfügung, sondern man erhält durch die Umfangsflächen von Vorsprung und Ausnehmung zusätzliche Verbindungsflächen.

Vorzugsweise weisen der Vorsprung und die Ausnehmung eine Drehmoment übertragende Querschnittsgeometrie auf. Dies lässt sich auf einfache Weise beispielsweise dadurch erreichen, dass der Vorsprung einen polygonartigen Querschnitt hat und die Ausnehmung entsprechend ausgebildet ist. In diesem Fall wird eine Drehung des Schaftes mit ausreichendem Drehmoment auf den Fortsatz übertragen, so dass die Gefahr eines Abscherens des Fortsatzes vom Schaft klein gehalten werden kann. Bevorzugterweise sind der Fortsatz und der Schaft durch Verkleben, Verpressen oder Aufschrumpfen miteinander verbunden. Alle diese Verbindungsmöglichkeiten erfordern einen relativ geringen Aufwand. Alternativ kann vorgesehen sein, dass der Fortsatz an den Schaft angespritzt ist. In diesem Fall wird die Spannschraube mit ihrem Schaft in eine Spritzgussform eingelegt und der Fortsatz wird dadurch erzeugt, dass ein entsprechender Kunststoff in die Spritzgussform eingespritzt wird.

Vorzugsweise weist der Befestigungsabschnitt im flexiblen Bereich einen geringeren Durchmesser auf als in einem Bereich außerhalb des flexiblen Bereichs, wobei der geringere Durchmesser so groß ist, dass er mit einem Gewinde am Gegengewindeelement in Eingriff kommt. Da über den flexiblen Bereich im Grunde keine Spannkräfte zwischen dem Gegengewindeelement und der Spannschraube wirken sollen, sondern der flexible Bereich nur zum Einfädeln der Spannschraube in das Gegengewindeelement benutzt werden soll, kann der Eingriff zwischen dem Gegengewindeelement und dem Fortsatz etwas schwächer ausgebildet werden. Der geringere Durchmesser der Befestigungsgeometrie auf dem flexiblen Bereich erleichtert allerdings das Einfädeln der Spannschraube in das Gegengewindeelement.

Auch ist von Vorteil, wenn der Befestigungsabschnitt ein Gewinde außerhalb des flexiblen Bereichs aufweist und im flexiblen Bereich Lamellen vorgesehen sind, die eine Befestigungsgeometrie bilden. Der flexible Bereich kann also eine von einem Gewinde abweichende Befestigungsgeometrie aufweisen, die durch ein Verbiegen nicht beschädigt wird.

Bevorzugterweise ist die Spannschelle als Profilschelle ausgebildet. Eine Profilschelle muss in der Regel relativ weit aufgebogen werden, um an der gewünschten Stelle montiert werden zu können. Hier ist das Einfädeln der Spannschraube in das Gegengewindeelement durch den flexiblen Bereich in besonderem Maße erleichtert.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Profilschelle und
- Fig. 2: eine schematische Darstellung einer Spannschraube.

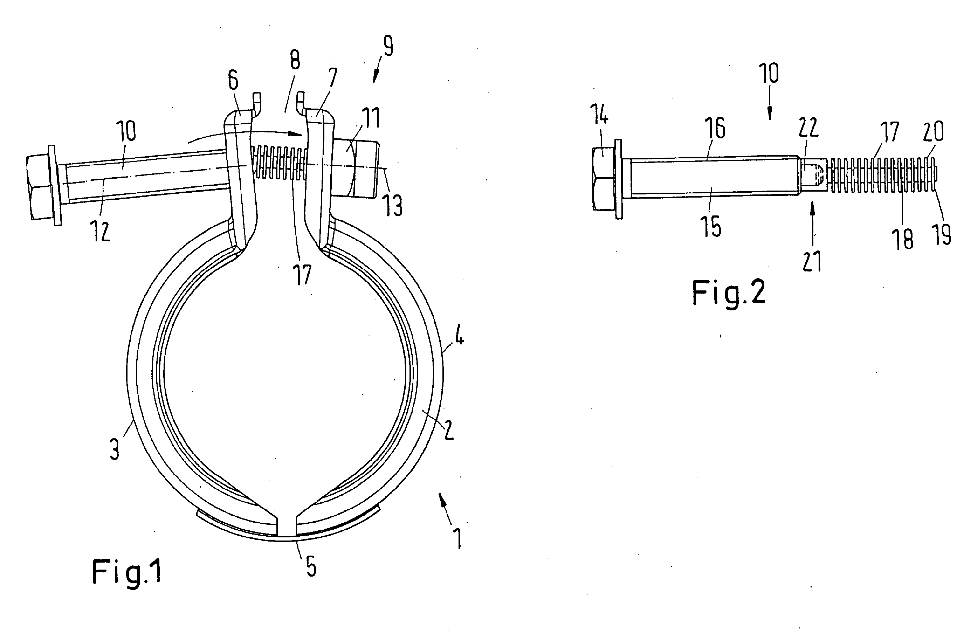

Fig. 1 zeigt eine als Profilschelle 1 ausgebildete Spannschelle. Die Profilschelle 1 weist ein ringförmig gebogenes Schellenband 2 auf. Das Schellenband 2 ist im vorliegenden Fall aus zwei Halbschalen 3, 4 gebildet, die über einen Federbügel 5 miteinander verbunden sind. Jede Halbschale 3, 4 weist ein Ende 6, 7 auf. Die beiden Enden 6, 7 sind, wie dargestellt, einander benachbart. Sie können allerdings zur Montage der Profilschelle 1 an einer Rohrverbindung voneinander weg bewegt werden, so dass ein Zwischenraum 8 zwischen den beiden Enden 6, 7 so weit vergrößert wird, dass die Montage der Profilschelle 1 an der Rohrverbindung möglich ist.

Zum Spannen der Profilschelle 1 ist die Profilschelle 1 mit einer Spannvorrichtung 9 versehen. Die Spannvorrichtung 9 weist eine Spannschraube 10 und ein Gegengewindeelement 11 auf, in das die Spannschraube 10 eingeschraubt werden kann. Das Gegengewindeelement 11 ist hier als Gewindebüchse ausgebildet. Es ist aber auch möglich, hier eine Mutter oder dergleichen vorzusehen, die in dem Ende 7 der Halbschale 4 gehalten wird. Das Gegengewindeelement 11 ist in dem Ende 7 unverdrehbar gehalten.

Wie in Fig. 1 zu erkennen ist, sind die beiden Enden 6, 7 nach dem Aufbiegen und wieder Zusammenbiegen nicht mehr parallel zueinander. Aus diesem Grunde stimmen eine Gewindeachse 12 der Spannschraube 10 und eine Gewindeachse 13 des Gegengewindeelements 11 nicht mehr überein. Eine derartige Übereinstimmung ist aber erforderlich, um die Spannschraube 10 in das Gegengewindeelement 11 einschrauben zu können.

Um dieses Einschrauben auch in der dargestellten Situation leicht vornehmen zu können, wird eine spezielle Spannschraube 10 verwendet, wie sie in Fig. 2 dargestellt ist.

Die Spannschraube 10 weist einen Schraubenkopf 14 auf, der im vorliegenden Fall als Außensechskant ausgebildet ist. Andere Ausbildungen sind möglich, beispielsweise Innensechskant, Schlitz, Kreuzschlitz, Torx oder dergleichen. Ferner weist die Spannschraube 10 einen Schaft 15 auf, der ein Außengewinde 16 trägt. Das Außengewinde 16 ist an ein Innengewinde im Gegengewindeelement 11 angepasst. Die Spannschraube ist im Bereich des Schraubenkopfes 14 und des Schaftes 15, die hier einstückig ausgebildet sind, aus einem Metall gebildet.

An dem Ende des Schafts 15, das vom Schraubenkopf 14 abgewandt ist, ist ein Fortsatz 17 aus einem Kunststoff angeordnet. Dieser Fortsatz 17 weist einen Kern 18 auf, der einen Durchmesser aufweist, der wesentlich kleiner ist als ein Durchmesser des massiven Teils des Schafts 15, d.h. des Durchmessers des Schafts 15 abzüglich der Tiefe des Außengewindes 16. Dies führt dazu, dass der Fortsatz 17 flexibel ist und somit einen flexiblen Bereich der Spannschraube 10 bildet. Der Fortsatz 17 kann also verbogen werden.

Dies kann ausgenutzt werden, wie dies in Fig. 1 dargestellt ist, um den Fortsatz 17 zum Einfädeln der Spannschraube 10 in das Gegengewindeelement 11 zu verwenden. Hierzu wird der Fortsatz 17 einfach so gebogen, dass seine Gewindeachse (nicht dargestellt) mit der Gewindeachse 13 des Gegengewindeelements 11 übereinstimmt.

Der Fortsatz weist neben dem Kern 18 auch mehrere mit Abstand zueinander angeordnete, parallele Lamellen 19 auf. Der Abstand entspricht vorzugsweise dem Abstand benachbarter Gewindegänge des Außengewindes 16, so dass der Fortsatz 17 ebenfalls eine Befestigungsgeometrie 20 trägt. Diese Befestigungsgeometrie 20, d.h. die Lamellen 19, kann in das Innengewinde des Gegengewindeelements 11 eingehängt werden und ermöglicht ein Aufeinanderzubewegen der beiden Enden 6, 7, wenn die Spannschraube 10 gedreht wird. Die Lamellen 19 orientieren sich am Innengewinde und bewegen sich bei der Drehung der Schraube parallel zur Gewindeachse 13. Allerdings ist der Außendurchmesser des Außengewindes 20 geringfügig kleiner als der Außendurchmesser des Außengewindes 16. Dies führt dazu, dass auch der Gewindeeingriff zwischen dem Fortsatz 17 und dem Gegengewindeelement 11 nicht so belastbar ist, wie ein entsprechender Gewindeeingriff zwischen dem Gegengewindeelement 11 und dem Schaft 15. Man dimensioniert daher den Fortsatz 17 so, dass das Gegengewindeelement 11 mit dem Außengewinde 16 auf dem Schaft 15 in Eingriff steht, sobald beim Festziehen der Spannschraube 10 Spannkräfte aufgebracht werden müssen. Dies ist in der Einfädelphase nicht der Fall, sondern erst in einer Spannphase. Der flexible Bereich der Spannschraube 10, also der Fortsatz 17, wird beim Spannen also nicht belastet.

Die Lamellen 19 sind in gewissem Umfang elastisch verformbar. Damit ist es möglich, den Fortsatz 17 in das Gegenelement 11 einzuführen und durch einen weiteren Druck weiter in das Gegengewindeelement 11 einzustecken. Die Lamellen 19 gleiten dann unter teilweiser Verformung am Gewinde des Gegengewindeelements 11 vorbei. Dies führt zu einer erheblichen Montagezeiteinsparung. Die Spitze des Fortsatzes 17 kann nach dem Einfädeln schnell durch das Gegengewindeelement hindurchgedrückt werden.

Wenn die Profilschelle 1 falsch montiert ist und Spannkräfte schon auftreten, solange das Gegengewinde 11 noch mit dem Fortsatz 17 in Eingriff steht, dann führt dies in der Regel dazu, dass der Fortsatz 17 abreißt oder die Lamellen 19 außer Eingriff mit dem Innengewinde kommen, was anzeigt, dass die Profilschelle 1 fehlerhaft montiert ist.

Der Fortsatz 17, der aus einem Kunststoff besteht, kann an dem Schaft 15 angespritzt sein.

Um eine Verbindungsstelle 21 zwischen dem Fortsatz 17 und dem Schaft 15 mit einer verbesserten Festigkeit zu versehen, kann der Schaft 15 mit einem Vorsprung 22 versehen sein, der in eine entsprechende Ausnehmung im Fortsatz 17 hineinragt. Dieser Vorsprung 22 kann eine Drehmoment übertragende Geometrie aufweisen, beispielsweise kann er als Vierkant oder als Sechskant ausgebildet oder ein Vielkeilprofil tragen.

Es ist auch möglich, den Fortsatz 17 und den Schaft 15 als getrennte Teile auszubilden und den Fortsatz 17 und den Schaft 15 dadurch miteinander zu verbinden, dass der Fortsatz 17 mit dem Schaft 15 verklebt wird, verpresst wird oder dass man den Fortsatz auf den Schaft aufschrumpft.

Es ist natürlich genauso gut möglich, den Vorsprung 22 am Fortsatz 17 auszubilden und eine entsprechende Ausnehmung im Schaft 15 vorzusehen. Die entsprechenden Verbindungsmöglichkeiten gelten hier genauso.

Wenn der Vorsprung 22 am Schaft 15 ausgebildet ist, dann kann man ihn beispielsweise dadurch relativ einfach herstellen, dass der Schaft 15 an diesem Ende etwas abgedreht wird.

Die Erfindung wurde am Beispiel einer Profilschelle erläutert. Sie ist jedoch prinzipiell bei anderen Schellen verwendbar, die gespannt werden sollen, z.B. bei Schlauchschellen, Rohrschellen und dergleichen.

## Patentansprüche

1. Spannschelle (1) mit einem ringförmig ausgebildeten Schellenband (2 u. 3), das zwei einander benachbarte Enden (6, 7) aufweist, die durch eine Spannvorrichtung (9) miteinander verbunden sind, wobei die Spannvorrichtung (9) eine Spannschraube (10) mit einem Schraubenkopf (14) und einem Befestigungsabschnitt und ein Gegengewindeelement (11) aufweist, mit dem die Spannschraube (10) verschraubbar ist, **dadurch gekennzeichnet, dass** der Befestigungsabschnitt entlang seiner Länge mindestens einen flexiblen Bereich (17) aufweist.

2. Spannschelle nach Anspruch 1, **dadurch gekennzeichnet, dass** der flexible Bereich (17) an einem Ende des Befestigungsabschnitts ausgebildet ist, der vom Schraubenkopf (14) abgewandt ist.

3. Spannschelle nach Anspruch 2, **dadurch gekennzeichnet, dass** der flexible Bereich an einem Fortsatz (17) ausgebildet ist, der mit einem Schaft (15) der Spannschraube (10) verbunden ist.

4. Spannschelle nach Anspruch 3, **dadurch gekennzeichnet, dass** der Fortsatz (17) eine Länge aufweist, bei der im gespannten Zustand der Spannschelle (1) das Gegengewindeelement (11) mit dem Schaft (15) in Eingriff steht.

5. Spannschelle nach Anspruch 4, **dadurch gekennzeichnet, dass** der Fortsatz (17) und der Schaft (15) aus unterschiedlichen Materialien gebildet sind, insbesondere der Schaft (15) aus einem Metall und der Fortsatz (17) aus einem Kunststoff gebildet ist.

6. Spannschelle nach einem der Ansprüche 3 bis 5, **dadurch gekennzeichnet, dass** an einer der beiden Teile Schaft (15) oder Fortsatz (17) ein Vorsprung (22) ausgebildet ist, der in einer Ausnehmung am anderen der beiden Teile Fortsatz (17) oder Schaft (15) eingreift.

7. Spannschelle nach Anspruch 6, **dadurch gekennzeichnet, dass** der Vorsprung (22) und die Ausnehmung eine Drehmoment übertragende Querschnittsgeometrie aufweisen.

8. Spannschelle nach einem der Ansprüche 3 bis 7, **dadurch gekennzeichnet, dass** der Fortsatz (17) und der Schaft (15) durch Verkleben, Verpressen oder Aufschrumpfen miteinander verbunden sind.

9. Spannschelle nach einem der Ansprüche 3 bis 7, **dadurch gekennzeichnet, dass** der Fortsatz (17) an den Schaft (15) angespritzt ist.

10. Spannschelle nach einem der Ansprüche 1 bis 9, **dadurch gekennzeichnet, dass** der Befestigungsabschnitt im flexiblen Bereich einen geringeren Durchmesser aufweist als in einem Bereich außerhalb des flexiblen Bereichs, wobei der geringere Durchmesser so groß ist, dass er mit einem Gewinde am Gegengewindeelement (11) in Eingriff kommt.

11. Spannschelle nach einem der Ansprüche 1 bis 10, **dadurch gekennzeichnet, dass** der Befestigungsabschnitt ein Gewinde (16) außerhalb des flexiblen Bereichs (17) aufweist und im flexiblen Bereich (17) Lamellen (19) vorgesehen sind, die eine Befestigungsgeometrie (20) bilden.

12. Spannschelle nach einem der Ansprüche 1 bis 11, **dadurch gekennzeichnet, dass** sie als Profilschelle ausgebildet ist.
